**Europäisches Patentamt**

**European Patent Office**

**Office européen des brevets**

(19)

(11) Publication number : **0 490 704 A2**

## (12) EUROPEAN PATENT APPLICATION

(21) Application number : **91311637.2**

(22) Date of filing : **13.12.91**

(51) Int. Cl.[5] : **B32B 27/36,** B32B 27/20,
C08J 5/18, C08K 3/22,
C08K 3/26, C08K 3/34,
C08K 5/00

(30) Priority : **13.12.90 JP 401878/90**
**27.03.91 JP 63516/90**

(43) Date of publication of application :
**17.06.92 Bulletin 92/25**

(84) Designated Contracting States :
**BE DE FR GB IT NL**

(71) Applicant : **TORAY INDUSTRIES, INC.**
**2-1, Nihonbashi Muromachi 2-chome Chuo-ku**
**Tokyo 103 (JP)**

(72) Inventor : **Ito, Tatsuya**
**1419, Oaza Godo, Godo-cho**
**Anpachi-gun, Gifu 503-23 (JP)**
Inventor : **Tsunashima, Kenji**
**1-22, Daigo Kamihayama-cho, Fushimi-ku**
**Kyoto-shi, Kyoto 601-13 (JP)**
Inventor : **Yamauchi, Hideyuki**
**696-2, Noji-cho**
**Kusatsu-shi, Shiga 525 (JP)**
Inventor : **Aoki, Seizo**
**454, Oono, Tsuchiyama-cho**
**Koka-gun, Shiga 528-02 (JP)**
Inventor : **Kurome, Hirokazu**
**10-B3-22, Sonoyama 2-chome**
**Otsu-shi, Shiga 520 (JP)**

(74) Representative : **Coleiro, Raymond et al**
**MEWBURN ELLIS 2 Cursitor Street**
**London EC4A 1BQ (GB)**

(54) **Process for forming a polyester film.**

(57)   A polyester film, which is substantially non-oriented and whose main component is polyethylene terephthalate (PET), is formed as a shaped article, for example, a package, under conditions in which the film has no yield point. The ability of the polyester film to form the shaped article is improved, and a shaped article having a good uniformity in thickness can be obtained. Further, the range of temperature conditions causing no yield point can be enlarged by laminating a PET polyester which originally tends to have a yield point when by itself, onto a polyester having no yield point.

EP 0 490 704 A2

Jouve, 18, rue Saint-Denis, 75001 PARIS

The present invention relates to a process for forming a polyester film, and more particularly to a process for forming a polyester film which can provide a formed body of the polyester film having good slipping property and uniformity in thickness with a good formation ability.

It has been proposed that polyester films can be used as packages by thermoforming them. For example, JP-A-SHO 47-391, JP-A-SHO 51-38335 and JP-A-SHO 62-19090 disclose the thermoforming of non-stretched films made from polyethylene terephthalate (PET), or copolymer or blended polymer of PET. Recently, non-stretched polyester films of PET have become commercially available as films called "A-PET" (amorphous PET) films.

In such proposed polyester films of PET for forming, however, in spite of the expectation that they may provide a substitute for hard polyvinyl chloride sheets, their use has not been developed to any great extent. This is because their ability to form a shaped article is not good and bodies formed therefrom tend to have relatively great irregularities in thickness.

Moreover, since these polyester films for forming have poor slipping properties. scratches are liable to occur during handling. Further, since they have poor releasing properties from molds in thermoforming, the shapes of the formed bodies therefrom tend to be deformed, and scratches are liable to occur on the surface of the formed bodies. Furthermore, since their slipping properties are still poor even in the stage after forming, a decrease in quality occurs during processing after forming. In particular, when the formed bodies are used as packages and a substance is automatically charged into the respective formed bodies, the formed bodies are stacked and set in a charging machine and they must be smoothly taken out from the machine one by one. When the conventional polyester films for forming are used for such a package and the formed bodies are employed in such a charging system, however, the formed bodies are sometimes caught on some part of the charging machine when they are taken out. This causes difficulties during the charging operation.

Accordingly, it would be desirable to provide a process for forming a polyester film which can decrease the non-uniformity in thickness caused when the film is formed as a shape, can improve the slipping properties in the stages of both forming the film and shaping it into an article, and can improve the releasing property from a mold in thermoforming.

A process for shaping a polyester film according to the present invention comprises the step of shaping a polyester film, which is substantially non-oriented and whose main component is polyethylene terephthalate, under conditions in which the film has no yield point.

Preferably, the film to be shaped is capable of realising a state in which it has no yield point when at a temperature within a range between upper and lower temperatures which differ from one another by a least 35°C, more preferably at least 40°C, especially at least 50°C, thus providing a wide temperature range within which shaping can be performed efficiently to obtain films having excellent properties.

If a film to be formed has a yield point under the conditions in which it is shaped, thinner portions of the film are easily stretched so as to be even thinner, while thicker portions are difficult to stretch at all or are stretched so as still to be relatively thick when the film is formed into a shaped body, for example, a package. Therefore, a package having a good uniformity in thickness cannot be obtained from such a film. In the process according to the present invention, however, since the polyester film, which is substantially non-oriented and whose main component is polyethylene terephthalate, is formed under conditions causing no yield point, the uniformity in thickness of a body formed from the film is fairly good.

The conditions causing no yield point can be achieved mainly by selecting the composition or lamination structure of the polyester film to be formed and the forming temperature. Although the condition causing no yield point can be achieved by a polyester film having a composition prepared by blending a polyester polymer having no yield point and another polyester polymer, it is achieved preferably by a polyester film having a lamination structure of an A-layer formed from a polyester (A) having no yield point and a B-layer formed from a film whose main component is polyethylene terephthalate. Since this A-layer formed from a polyester (A) has a relatively high degree of crystallinity, the surface of the A-layer itself after forming is easily formed as a surface having a relatively large roughness suitable for providing the desired lack of slippage. Alternatively, in a case where particles are contained in the A-layer, because the degree of crystallinity of the A-layer is high, protrusions on the surface of the A-layer suitable for lack of slippage can be easily formed by the particles. Therefore, such a polyester film can have a good slipping property when it is formed, and the body formed from the film can also have a good slipping property. Moreover, since the the adhesive force of such a polyester film to a metal is relatively small (because the degree of crystallinity of the A-layer is high), a good releasing property from a mold in thermoforming can be achieved.

Some preferred exemplary embodiments of the invention will now be described with reference to the accompanying drawings which are given by way of example only.

FIG. 1 is a graph showing an example of the relationship between the stretching stress and the strain of a film having no yield point.

FIG. 2 is a graph showing an example of the relationship between the stretching stress and the strain of a film having a yield point.

FIG. 3 is a graph showing an example of the variation of the stretching stress-strain curve of a film accompanying a variation in temperature (T1-T5).

Next, the present invention will be explained in more detail by embodiments and examples.

In the process of the present invention, a polyester film is formed into a desired shape under conditions causing no yield point. Although this condition causing no yield point can be realised by making the polyester film from a composition prepared by blending a polyester polymer originally having no yield point and another polyester polymer, preferably it is realised by using a polyester film made by laminating an A-layer formed from a polyester (A) originally having no yield point onto a B-layer formed from a film whose main component is polyethylene terephthalate. Namely, the polyester film having such a lamination structure is formed into a desired shape, for example a package under conditions causing no yield point. The conditions causing no yield point can be achieved mainly by controlling the forming temperature within the range as described later.

In a film to be shaped by the process of the present invention, the melting point of polyester (A) is preferably not less than 180°C, and more preferably not less than 200°C. $\Delta Tcg$ of the polyester (A), which is the difference between the cold crystallisation temperature and the glass transition temperature of the polyester, is preferably not greater than 50°C, and more preferably not greater than 40°C. In a case where the melting point is lower than the above value or the $\Delta Tcg$ is higher than the above value, the polyester film tends to melt-adhere to the mold in thermoforming, or the blocking propensity between the films increases. A low $\Delta Tcg$ is profitable for achieving a degree of crystallinity of the A-layer formed from a polyester (A) within a range preferred for carrying out the process of the present invention.

Polyester (A) is preferably, for example, polybutylene terephthalate, polybutylene naphthalate or a copolymerized polyester whose main component is polybutylene terephthalate or polybutylene naphthalate. The component to be copolymerized is, for example, ethylene glycol, neopentyl glycol, cyclohexanedimethanol, cyclohexanedicarboxylic acid, isophthalic acid or 2,6-naphthalenedicarboxylic acid. The amount of the copolymer is preferably in the range of 1-45 mol%. Alternatively, as polyester (A), a polyester made by blending polybutylene terephthalate, polybutylene naphthalate or a copolymerized polyester whose main component is polybutylene terephthalate or polybutylene naphthalate and polycarbonate can be also used. Polycarnonate has a good compatibility with polybutylene terephthalate, etc., and the crystallinity of polybutylene terephthalate etc. can be controlled by the blending. The amount of blended polycarbonate is preferably in the range of 1-45 wt%, more preferably in the range of 5-35 wt% relative to the entire polymer.

The glass transition temperature of a polyester, which forms a B-layer and whose main component is polyethylene terephthalate (hereinafter, also referred to as "PET"), is preferably not less than 60 °C, and more preferably not less than 70°C. $\Delta Tcg$ of the polyester is preferably not less than 60 °C, and more preferably not less than 70°C. If the glass transition temperature is lower than the above value, the thermal dimensional stability of a body formed from the polyester film by thermoforming decreases and the formed body therefore tends to be deformed. If the $\Delta Tcg$ of the polyester is lower than the above value, the formation ability of the polyester film decreases. This polyester is composed of a simple polyethylene terephthalate or a copolymerized polyester whose main component is polyethylene terephthalate. The component to be copolymerized is preferably, for example, 1,4-butanediol, neopentyl glycol, cyclohexanedimethanol, cyclohexanedicarboxylic acid, isophthalic acid or 2,6-naphthalenedicarboxylic acid. The amount of the copolymer is preferably in the range of 1-45 mol%.

The inherent viscosity (IV) of polyester (A) is preferably in the range of 0.75-1.20, and the inherent viscosity (IV) of the polyester whose main component is PET is preferebly in the range of 0.70-1.10. If either inherent viscosity of polyester (A) or inherent viscosity of the polyester whose main component is PET is lower than the above value, the change with the passage of time of the mechanical properties of the film after producing a non-stretched film becomes large; in particular the elongation thereof greatly decreases. If the inherent viscosity is too high, the melt viscosity becomes too high. Therefore, it is difficult to produce a film, or even if it is possible to make a film, the formation stress of the film in thermoforming becomes too high. With respect to polyester (A), the elongation of the polyester (A) must be high because the layer of the polyester (A) in the film according to the present invention is thin, and therefore, preferably the inherent viscosity of the polyester (A) is relatively high.

In the polyester film for forming according to the present invention, the adhesive force between the surface of A-layer and a metal at a temperature of 100°C is preferably not greater than 20g, and more preferably not greater than 15g. As aforementioned, one of the problems in the conventional PET-system films for forming is a poor releasing property from a mold in thermoforming. As the result of investigations it has been found that, when using a process according to the present invention, the above low adhesive force of the A-layer can increase the formation ability of the film to a shape defined by a mold.

The degree of crystallinity of the A-layer is preferably in the range of 5-20%, and more preferably in the range of 7-15%. In the process of the present invention, a film containing inert particles can be employed in order to provide the surface of a formed body with good slipping properties by controlling the surface roughness of the A-layer of the film to give a roughness value within a desirable range.

However, since a film to be formed by a process according to the present invention is a non-stretched film, a good slipping property of the film cannot be obtained merely by adding particles to the film, because the added particles cannot form protrusions on the surface of the film effective to improve the slipping property of the film at the non-stretched state. After thermoforming, although a slightly good slipping property can be expected on the portions of the formed body which have been stretched in the forming process, remaining portions, which have not been stretched, cannot have a good slipping property, and the formed body still cannot have a good slipping property as a whole. In contrast, in the present invention, a sufficient slipping property can be obtained for the film,and therefore for the formed body as a whole, by controlling the degree of crystallinity of the A-layer to give a value higher than a specified degree of crystallinity and adding the particles described later. On the contrary, if the degree of crystallinity of the A-layer is too high, the transparency of the film rapidly decreases and the film becomes hazy, Moreover, the formation stress in thermoforming also rises and the formation ability decreases, and particularly when a vacuum forming system which can utilize only an ambient pressure is employed, a good formation ability cannot be obtained. That the degree of crystallinity of the A-layer is not less than 5%, by itself, is effective to improve the releasing ability from a high-temperature mold.

The degree of crystallinity of B-layer, which is composed of a polyester whose main component is polyethylene terephthalate, is preferably less than 5%, and more preferably less than 3%. If the crystallization of B-layer proceeds too much, the formation stress of the whole of the film increases and the formation ability of the film thereby decreases.

In the polyester film for forming according to the present invention, the mean surface roughness (Ra) of A-layer is preferably in the range of 0.005-0.1 $\mu$m, and more preferably in the range of 0.01-0.05 $\mu$m. When the mean surface roughness is not less than 0.005 $\mu$m, good slipping properties in the state of a film, during forming and in the state of a formed body can be obtained when the degree of crystallinity lies within the above-mentioned range. If the mean surface roughness is too great, the transparency of the film deteriorates.

In a film used in a process of the present invention, preferably inert particles are added to A-layer, which is composed of polyester (A), in order to facilitate the control of the surface roughness of the film. The mean particle diameter of the added inert particles is preferably in the range of 0.10-10 $\mu$m, and more preferably in the range of 0.1-5 $\mu$m. T amount of particles is preferably in the range of 0.01-0.5 wt%, and more preferably in the range of 0.05-0.3 wt%. If the mean particle diameter is too small, there is a fear that the particles cannot form sufficiently high protrusions on the surface of the film and a good slipping property cannot be expected. If the mean particle diamter is too large, the transparency of the film deteriorates, and this is therefore undesirable. The amount of particles added is preferably in the above range for the same reasons. The composition of the inert particles is, for example, an inorganic compound such as silicon oxide, aluminum oxide, zirconium oxide, calcium carbonate, magnesium carbonate or talc, or an unmeltable organic compound such as cross-linked polystyrene, cross-linked divinylbenzene, benzoguanamine or silicone. Particularly, colloidal silica, ground silica, cross-linked polystyrene, and silicone are preferable from the view point of maintaining the transparency of the film.

Although the total thickness of the polyester film for forming according to the present invention is preferably about from 50 $\mu$m to 2mm, the ratio of the respective thicknesses of the A- and B-layers (A:B) is preferably in the range of 1:200 - 1:4, and more preferably in the range of 1:100 - 1:5. This ratio in thickness should be chosen depending upon the conditions of use of the polyester film. For example, in the case of a process wherein a package is quickly formed by plug assist, such as "PTP" (press through pack) for medicines, preferably the A-layer thickness is slightly raised in order to cover the poor stretching property of the B-layer whose degree of crystallinity is relatively low. On the contrary, in the case of a process wherein the forming speed is low and a film having a large forming stress in not suitable, such as a process wherein a relatively large blister package is formed by vacuum forming, the A-layer thickness is preferably reduced in order to prevent the forming stress of the A-layer from becoming too high. Particularly, in a polyester film having a thickness of not less than 300 $\mu$m, the thickness of the A-layer is preferably less than 50 $\mu$m, and more preferably less than 10 $\mu$m.

In the polyester film for forming according to the present invention or a formed body therefrom, a generally used additive, for example, antistatic agent, thermal stabilizer, oxidation inhibitor, crystalline nuclei agent, weather resistance agent, ultraviolet absorbent, pigment etc., may be added in a volume which does not substantially decrease the advantages according to the present invention. Further, a surface roughening processing such as embossing or sand mat processing, or a surface treatment such as corona treatment or plasma treatment may be conducted as needed.

In the process of the present invention polyester film as described above is formed into a shape, for example, a package, under conditions causing no yield point.

In the present invention, "forming" means that the polyester film is formed as a product having a required shape by heating and/or pressing the film. Typical forming processes are compression molding, vacuum forming, pressure forming, vacuum-pressure forming, and plug assist processes of these forming processes. However, the process for forming the polyester film is not particularly restricted in the present invention. With respect to the preheating of the film before forming, a heating plate process or infrared heating process can be applied. In the preheating, however, heating for too lone a period od of time is not desirable, because the crystallization of A-layer proceeds too much and the film therefore becomes hazy.

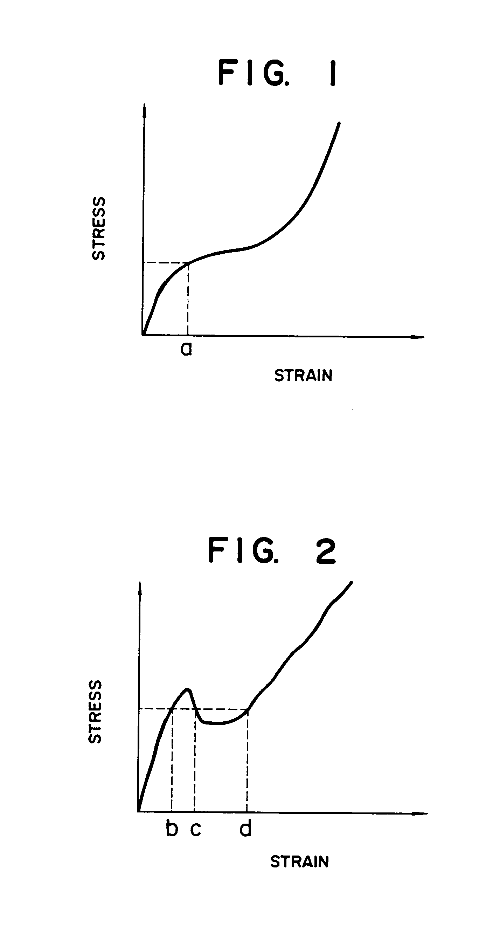

In this specification, "condition causing no yield point" means a state such that, in a graph plotted with the data of stresses and strains generated when a substantially non-oriented film is stretched, the stresses correspond to the strains at one to one. FIG. 1 shows a typical pattern of a stretching stress having no yield point. In Fig. 1, one stretching stress corresponds to only one stretching strain "a". FIG. 2 shows a pattern of stretching in which a yield point is caused. In FIG. 2, a single stretching stress corresponds to three stretching strains "b", "c" and "d".

As a method effective to realize a condition causing no yield point in a polyester film for forming which used a polyester having a yield point, there is the following method. The method comprises the step of laminating a polyester (A), which has no yield point and whose stretching stress is large, thinly onto a polyester which has a yield point and whose main component is polyethylene terephthalate. Typical polymers of this polyester (A) which has no yield point are polybutylene terephthalate, polybutylene naphthalate and copolymerized polymers thereof. The speeds of crystallization of these polymers are fast, and "ΔTcg"s of the polymers are not greater than 50 °C. Of course, even in these polymers, there occurs a yield point in the area lower than a glass transition temperature "Tg" or when the polymers are stretched at an abnormally high temperature. In contrast, there is a polymer which has a yield point even if the stretching temperature is controlled at any temperature. Typical of such polymers is polyethylene terephthalate. In the present invention, the main component of the B-layer ispolyethylene terephthalate. The speed of crystallization of such a polymer is low, and ΔTcg of the polymer is not less than 60°C. In the present invention, an A-layer formed from a polyester (A) having no yield point is laminated onto a B-layer formed from a film whose main component is polyethylene terephthalate, and thereby a polyester film for forming, which does not cause a yield point when the film is formed under particular conditions. is produced.

From the viewpoint of realizing a condition causing no yield point and preventing the stretching stress from becoming too high, the thickness of A-layer is preferably not less than 1 μm and less than 50 μm, and more preferably not less than 3 μ m and less than 10 μm. Further, the thickness of A-layer is preferably less than 15% of the total thickness of the polyester film to be formed, and more preferably less than 15% of the total thickness.

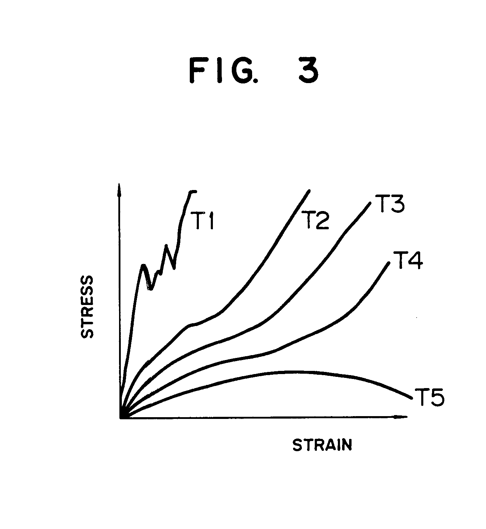

The behaviour of a film capable of realizing a state in which it has no yield point is shown in FIG. 3. Thus, the film has no yield point within a range "ΔT" of temperatures from a temperature higher than a low temperature "T1" indicating a yield point to a temperature lower than a high temperature "T5" indicating a yield point again. Temperatures "T2", "T3" and "T4" indicating no yield point are in this range "ΔT". This temperature range "ΔT" is preferably not less than a range of 35°C, more preferably not less than a range of 40°C, and furthermore preferably not less than a range of 50°C, from the viewpoint of obtaining a uniform thickness of a formed body.

The stretching tension of the A-layer is preferably in the range of from 5 times to 100 times the stretching tension of B-layer, from the viewpoint of obtaining a uniform thickness of a formed body. This ratio between the stretching tensions is defined as the ratio between stretching tensions at a stretching strain of 100% (stretching ratio: two times). In the determination of the ratio, a plurality of ratios are compared under the same conditions of film thickness and stretching conditions.

In the present invention, the polyester film is formed under conditions particularly at a temperature indicating no yield point within the above-mentioned range. The "temperature for forming" the film means the temperature which is actually applied to a film when the film is formed, and the temperature for forming is, for example, a preheating temperature in vacuum forming or a temperature for melting the paracrystals observed when the thermal property of a formed body is determined using a differential scanning calorimeter (DSC). Namely, when the polyester film is heated for forming, a paracrystal form is generated having a melting point equal to the heating temperature. This paracrystal can be distinguished from an original crystal. When the thermal property of the formed body is determined in a similar manner after the formed body is molten again and thereafter rapidly cooled, the peak of the temperature for melting the paracrystal disappears. Here, there is a case where the temperature controlled in a practical forming machine does not meet with the temperature which is actually applied to a film. Particularly in an infrared heating, the determination of the temperature of a film is important, and the temperature can be determined by, for example, an infrared thermometer or a thermolabel.

The body formed by the process for forming a polyester film according to the present invention is suitable for a PTP package, a blister package, a tray, and other packages, containers and closures which have been

EP 0 490 704 A2

made by thermoforming hard polyvinyl chloride sheets, and further for a carrier tape for electronic parts. However, the use for the formed body is not restricted by these materials.

Next, a preferred process for producing the film according to the present invention will be explained in more detail.

Polyester (A) and the polyester whose main component is PET are melt-extruded by separate extruders, and the extruded polymers are delivered from a feed block or a die having a composite manifold in a form of a film having a lamination structure of two kinds of polymers. The delivered film is case and rapidly cooled at a temperature of not higher than the cold crystallization temperature of polyester (A), preferably not higher than the glass transition temperature thereof. The condition for this cooling is important to control the degree of crystallinity of each film layer of the cast film within the range desired for a process of the present invention, and the cooling conditions are appropriately set depending upon the polyester resins used. It should be noted that the cooling conditions include not only the temperature for casting to cool the film but also various other conditions. Therefore, the cooling conditions must be chosen having regard to other conditions such as those of the temperature of polymer extrusion, film thickness, the surface roughness of the casting drum and the rotational speed of the casting drum, and the nature of sheet contacting system such as electrostatic charge system or air knife system. The film according to the present invention is different from a film such as a biaxially oriented film whose final state can be controlled by the conditions of stretching and heat treatment after rapid cooling.

For example, the surface roughness of the casting drum directly affects the coefficient of heat transfer between the film and the drum. When the surface is rough, a small amount of air intervenes between the film and the surface of the drum and the rate of heat transfer therebetween decreases. Thus, even if the temperature of the casting drum is in the same condition, the cooling rate of the film varies depending on the surface roughness of the drum. Also with respect to the nature of the sheet contacting system, the cooling rate of the film varies. For example, the degree of the film contact with the the drum greatly varies depending upon whether an electrostatic charge system is employed or not, and thereby the cooling rate of the film greatly varies.

The cast film thus obtained is wound, and the polyester film for formingh according to the present invention can be obtained. The degree of crystallinity of the polyester film may be controlled by, for example, bringing the film into contact with heated rollers. Moreover, various surface treatments or surface roughening treatments or processings may be conducted.

Next, methods for determining and estimating the characteristics to be controlled in the present invention will be explained.

(1) Degree of crystallinity:

A section of the polyester film is made by cutting it in the thickness direction. The peak width at half height of the intensity of each layer in the film measured by laser Raman spectroscopic analysis is determined, and the degree of crystallinity is determined from the peak widths of the amorphous state and crystallized state of the polyester. The degree of crystallinity is also determined by a method wherein each layer in the film is cut out, the density of each layer is measured by a density gradient tube and the degree of crystallinity is determined from the densities of the amorphous state and crystallized state of the polyester.

(2) Melting point (Tm), Glass transition temperature (Tg), Cold crystallization temperature (Tcc), ΔTcg:

A differential scanning calorimeter (DSC-2 type; produced by Perkin Elmer corporation) is used for determination. A sample of 10mg is placed at a melting state for five minutes in an atmosphere of nitrogen at a temperature of 280°C, and thereafter the sample is rapidly cooled in liquefied nitrogen. The sample obtained is heated at a speed of 10°C/min., the change of specific heat due to the transition to a glass state or a rubber state caused during the elevation of the temperature is determined, and the temperature causing this change is determined as the glass transition temperature (Tg). Further, the exothermic peak temperature accompanying crystallization is determined as the cold crystallization temperature (Tcc), and the endothermic peak temperature due to melting of crystal is determined as the melting point (Tm). ΔTcg is the difference between the cold crystallization temperature and the glass transition temperature (Tcc-Tg).

(3) Inherent viscosity (IV):

The inherent viscosity is determined at a temperature of 25 °C using o-chlorophenol as a solvent. The unit is dl/g.

(4) Mean surface roughness (Ra):

A stylus type surface roughness tester (Hommel tester T10) defined in DIN-4768 is used. The roughness (Ra) is determined as center line average height at a cut-off of 0.25mm.

(5) Adhesive force:

An end portion of a film sample with a width of 10mm and a length of 40mm is bent at a position distanced by 5mm from the terminal end to form the sample as an L-shape, and a portion of 10mm x 5mm is stacked on an iron plate (surface roughness: 0. 2S) which is plated with chrome and heated to a predetermined temperature. After maintaining the sample in this state for twenty seconds, the sample is delaminated at an angle of 90 degrees from the plate at a speed of 30 mm/min., and the force at that time is determined by a strain gauge as the adhesive force. The unit thereof is "g".

(6) Formation ability:

The film is formed as a predetermined shape by using a forming machine (PTP forming machine; produced by CKD corporation). The preheating temperature of a hot plate heating system in the forming machine is defined as the temperature for forming the film. The formation ability is assessed and given one of the following four ranks.

Rank "A":     The film is uniformly formed without irregularity in thickness.
Rank "B":     The film can be formed and a shaped body can be used in practice although there is an irregularity in thickness.
Rank "C":     A body formed from the film has a large irregularity in thickness and it cannot be used in practice.
Rank "D":     The film cannot be formed because blocking against the mold or a crack occurs.

The transparency of the formed body at a position of the pocket portion of the formed body is assessed and given one of the following three ranks.

Rank "A":     The transparency of the formed body is good.
Rank "B":     Although the transparency of the formed body is not so good, the formed body can be used in practice.
Rank "C":     The transparency of the formed body is very bad, and therefore the formed body cannot be used.

(7) Temperature for melting paracrystal:

A freely selected portion, preferably a portion composed of only A-layer, is cut out from a formed body. The temperature for melting the paracrystal is observed when the sample of 10mg is heated from room temperature at a speed of 10 °C/min using a differential scanning calorimeter (DSC-2 type; produced by Perkin Elmer corporation). The temperature for melting the paracrystal is present as a peak temperature lower than the temperature for melting the crystal.

(8) Haze (a value converted to a haze on 100 μm in thickness):

The haze ($H_{100}$) is determined by the following equation, based on ASTM-D1003-61.

$$H_{100}(\%) = H \times 100/d$$

where, "H" is an actual data of a haze (%), and "d" is the thickness of the film at a position where the haze is measured. An internal haze can be determined in a state wherein the film is dipped in a quartz cell containing tetralin.

(9) Stretching tension:

A film stretcher Produced by T. M. Long corporation is used. The tension of the film in the stretching direction and in the fixed direction (non-stretching direction) are determined by a transducer crip. With stretching conditions, stretching speed is 5000%/min., preheating time is 30 seconds, and the film is fixed in the transverse direction and stretched in the longitudinal direction. The thickness of the film is in the range of 200-250 μm.

EXAMPLES

Some preferred examples will be hereinafter explained together with some comparative examples. The resulting data of determination and estimation are shown in Tables 1 to 3.

Example 1

Polybutylene terephthalate (PBT, $\Delta$Tcg = 10°C, Tm = 220°C, IV = 0.94) was prepared as polyester (A), and polyethylene terephthalate copolymer copolymerized with 5mol% 1,4-cyclohexanedimethanol as glycol component (P(E/C)T, $\Delta$Tcg = 80°C, Tm = 245°C, IV = 0.80) was prepared as a polyester whose main component was polyethylene terephthalate (polyester (B)). Silicon oxide particles (0.3%) having a mean particle diameter of 0.2 μm were added to the polyester (A). These two kinds of polyester were dried by vacuum drying to suppress the water content to a value of not greater than 50ppm. The dried polyesters were melt-extruded separately by two extruders, the extruded polyester were laminated in a feed block so that a layer of polyeste (A) was positioned on each side of the layer of polyester (B) (lamination structure: A/B/A) and the laminated polyesters were delivered out from a T-type die at a temperature of 275 °C in a form of a film. The film was cast onto a casting drum whose surface temperature was controlled at 40 °C, the cast film was cooled thereon, and the cooled film was wound. The surface roughness of the drum was 0.2S, the rotational speed of the drum was 10 m/min. and an electrostatic charge system was employed to increase the cooling efficiency by bringing the film sufficiently into contact with the drum. The total thickness of the film obtained was about 200 μm and the thickness ratio in the lamination (A:B:A) was 8-185-8. The degree of crystallinity of the A-layer was 13%, and that of the B-layer was 2%. The inherent viscosity (IV) of the A-layer was 0.91, and that of the B-layer was 0.78. The pattern of the stretching tension (stress) of the film did not indicate a yield point (similar to a curve having no yield point shown in FIG. 3). The temperature range indicating no yield point in this film was broad, namely a range of 55°C (80-135°C). The stretching tension of polyester (A) is eight times that of polyester (B).

The formation ability of the film obtained was good under condition within a broad range of forming temperatures. Moreover, the transparency of the film was good. Furthermore, the formed body was uniform in thickness, and the slipping property thereof was good.

Example 2

The film was made in the same manner as that in Example 1 except that the content of the particles in the polyester (A) was 0.001wt%. Although the pattern of the Stretching tension of the film obtained was near that of Example 1, there was a case where the slipping property of the film was insufficient and the releasing property from a mold when it was formed was slightly poor. Further, there also was a case where the slipping property of the formed body was insufficient and it was difficult to smoothly take out the formed body from the group of stacked formed bodies one to one.

Comparative Example 1

The film was made in the same manner as that in Example 1 except that the temperature of the casting drum was controlled at 10°C. It was almost impossible to find a temperature range indicating no yield point of the film obtained, and even when the film could be formed, the irregularity in thickness was large. The releasing property from a mold of the film obtained was not good, and when the forming temperature was elevated, the forming was impossible.

Example 3

The film was made in the same manner as that in Example 1 except that the temperature of the casting drum was controlled at 55 °C. Although a body having a small irregularity in thickness could be formed from the film obtained, the stress of the film when it was formed was large, and the corners of the formed body could not be formed sharply. Although the slipping property of the film obtained and that of the formed body were both good, the transparencies thereof were slightly poor.

Example 4

Polybutylene terephthalate (IV = 1.4, 0.075wt% Thyroid 150 was added) was prepared as polyester (A), and a polyester copolymer made by condensation polymerization with mixture of 50/50mol% ethylene glycol and cyclohexanedimethanol and 100mol% terephthalic acid was prepared as a PET-system polyester (IV = 1.0). The respective polymers were supplied to an extruder having a diameter of 90mm and an extruder having a diameter of 250mm. The polymers were laminated in a T-type to form a three layer lamination structure of A/B/A (thickness ratio: 5/90/5), and the laminated film was delivered from the die. The delivered film was cast onto a sandblasted roll whose surface temperature was controlled at 40°C, and the cast film was cooled thereon. At the same time, the film was brought into contact with the surface of the roll by the air chamber method. The thickness of the film obtained was 200 μm, and the birefringence of the film was 0.001, so it was substantially non-oriented. The pattern of stretching of the film did not indicate a yield point (similar to a curve having no yield point shown in FIG. 3). The temperature range indicating no yield point in this film was broad, namely a range of 50 °C (80-130°C). The stretching stress of polyester (A) was ten times that of the polyester whose main component is PET. The formation ability of the film obtained was good under conditions within a broad range of forming temperatures.

## Example 5

The film was made in the same manner as that in Example 1 except that Polyethylene terephthalate · isophthalate (PET/I, isophthalic acid component: 5mol%, $\Delta$Tcg = 70°C) was prepared as polyester (B). The formation ability of the film obtained was good under conditions within a broad range of forming temperatures. The transparency and slipping property of the formed body were both good, and the uniformity in thickness of the formed body was also good.

## Example 6

The film was made in the same manner as that in Example 1 except that polybutylene terephthalate· isophthalate (PBT/I, isophthalic acid component: 5mol%, $\Delta$Tcg = 25°C) was prepared as polyester (A) and that poly(ethylene·neopentyl)terephthalate (P(E/N)T, neopentyl glycol component: 5mol%, $\Delta$Tcg = 80°C) was prepared as polyester (B). The formation ability of the film obtained was good under conditions within a broad range of forming temperatures. The slipping property of the formed body was good, and the uniformity in thickness of the formed body was also good.

## Comparative Example 2

The film was made in the same manner as that in Example 3 except that polybutylene terephthalate · isophthalate (PBT/I, isophthalic acid component: 40mol%, $\Delta$Tcg = 40°C) was prepared as polyester (A). It was almost impossible to find a temperature range indicating no yield point of the film obtained, and even when the film could be formed, the irregularity in thickness was large. The releasing property from a mold of the film obtained was not good because the melting point of PBT/I used as polyester (A) was low (150°C), and when the forming temperature was elevated, the forming was impossible.

## Comparative Example 3

The film was made as a single layer film of polyester (B) without laminating a layer of polyester (A). The film was made in a manner similar to that in Example 1, using a polyethylene terephthalate copolymer prepared by copolymerizing 5mol% 1,4-cyclohexanedimethanol as the glycol component (P(E/C)T) as polyester (B) (silicon oxide particles were added to 0.3wt%). It was almost impossible to find a temperature range indicating no yield point of the film obtained; and even when the film could be formed, the irregularity in thickness was large. The releasing property from a mold of the film obtained was not good when the temperature for forming was elevated, and a sufficient forming ability could not be achieved.

## Example 7

The film was made in the same manner as that in Example 1 except that a polyester prepared by blending polybutylene terephthalate and polycarbonate at a weight ratio of 90:10 was used as polyester (A). The temperature range within which the film indicated no yield point was 40°C. The stretching tension of polyester (A) was 6.5 times that of the polyester whose main component was PET. The formation ability of the film obtained was good under conditions within a broad range of forming temperatures, and the corners of the formed body could be formed sharp.

9

Example 8

The film was made in the same manner as that in Example 1 except that a polyester prepared by blending polybutylene terephthalate and polycarbonate at a weight ratio of 70:30 was used as polyester (A). The temperature range within with the film indicated no yield point was 35°C. The stretching tension of polyester (A) was 5.5 times that of the polyester whose main component was PET. The formation ability of the film obtained was good under conditions within a broad range of forming temperatures, and the transparency there of also excellent.

EP 0 490 704 A2

TABLE 1

| | Example 1 | Example 2 | Comp. Ex. 1 | Example 3 |
|---|---|---|---|---|
| Lamination Structure ($\mu$m) | | | | |
| First layer (A) | 8 | 8 | 8 | 8 |
| Second layer (B) | 1 8 5 | 1 8 5 | 1 8 5 | 1 8 5 |
| Third layer (A) | 8 | 8 | 8 | 8 |
| Degree of crystallinity (%) | | | | |
| First layer (A) | 1 3 | 1 3 | 4 | 2 2 |
| Second layer (B) | 3 | 2 | 2 | 6 |
| Third layer (A) | 1 3 | 1 5 | 4 | 2 4 |
| Surface Roughness ($\mu$m) | 0. 0 2 1 | 0. 0 0 8 | 0. 0 0 9 | 0. 0 2 7 |
| Adhesive force (g) | 9 | 9 | 2 2 | 6 |
| Haze (%) | 1. 8 | 1. 4 | 1. 0 | 2. 5 |
| Temperature range indicating no yield point (°C) | 5 5 (80–135 °C) | 5 0 (80–130 °C) | — — | 4 0 (100–140°C) |
| Result of formation (formation ability/transparency) Forming temperature (Preheating temperature) | | | | |
| 85 °C | A／B | A／A | C／B | C／B |
| 100 °C | A／A | A／A | C／B | B／B |
| 115 °C | A／A | B／A | D／− | A／B |
| 130 °C | A／A | B／A | D／− | A／B |

11

TABLE 2

| | Example 4 | Example 5 | Example 6 | Comp. Ex. 2 | Comp. Ex. 3 |
|---|---|---|---|---|---|
| Lamination Structure ($\mu$ m) | | | | | |
| First layer (A) | 1 0 | 8 | 8 | 8 | — |
| Second layer (B) | 1 8 0 | 1 8 5 | 1 8 5 | 1 8 5 | 2 0 0 |
| Third layer (A) | 1 0 | 8 | 8 | 8 | — |
| Degree of crystallinity (%) | | | | | |
| First layer (A) | 1 3 | 1 2 | 9 | 4 | — |
| Second layer (B) | 2 | 2 | 2 | 3 | 4 |
| Third layer (A) | 1 3 | 1 2 | 9 | 4 | — |
| Surface Roughness ($\mu$ m) | 0 . 0 3 0 | 0 . 0 2 3 | 0 . 0 1 9 | 0 . 0 1 0 | 0 . 0 1 5 |
| Adhesive force (g) | 1 1 | 8 | 1 4 | 3 5 | 3 9 |
| Haze (%) | 1 . 5 | 1 . 6 | 1 . 7 | 1 . 5 | 1 . 6 |
| Temperature range indicating no yield point (℃) | 5 0 (80-130 ℃) | 4 5 (85-130 ℃) | 4 0 (80-120 ℃) | — — | — — |
| Result of formation (formation ability/transparency) Forming temperature (Preheating temperature) | | | | | |
| 85 ℃ | A／A | A／A | A／A | C／B | D／− |
| 100 ℃ | A／A | A／A | A／A | C／B | C／B |
| 115 ℃ | A／A | A／A | A／A | D／− | D／− |
| 130 ℃ | A／A | A／A | C／A | D／− | D／− |

EP 0 490 704 A2

TABLE 3

| | Example 7 | Example 8 |
|---|---|---|
| Lamination Structure ($\mu$ m) | | |
| First layer (A) | 1 0 | 1 0 |
| Second layer (B) | 1 8 0 | 1 8 0 |
| Third layer (A) | 1 0 | 1 0 |
| Degree of crystallinity (%) | | |
| First layer (A) | 9 | 7 |
| Second layer (B) | 4 | 3 |
| Third layer (A) | 9 | 7 |
| Surface Roughness ($\mu$ m) | 0. 0 2 5 | 0. 0 2 8 |
| Adhesive force (g) | 1 3 | 1 8 |
| Haze (%) | 1. 8 | 1. 7 |
| Temperature range indicating no yield point (℃) | 4 0 (80-120 ℃) | 3 5 (85-120 ℃) |
| Result of formation (formation ability/transparency) Forming temperature (Preheating temperature) | | |
| 85 ℃ | A／B | A／A |
| 100 ℃ | A／A | A／A |
| 115 ℃ | A／A | A／A |
| 130 ℃ | C／A | C／A |

## Claims

1. A process for forming a polyester film characterized in that said polyester film is substantially non-oriented, the main component of said polyester film is polyethylene terephthalate, and said polyester film is formed at a condition causing no yield point.

2. The process according to claim 1, wherein the film to be formed is capable of realizing a state in which said film has no yield point when at a temperature within a range between upper and lower temperatures which differ from one another by at least 35°C.

3. The process according to any preceding claim, wherein the film to be formed is a laminate of an A-layer formed from a polyester (A) having no yield point and a B-layer formed from a film whose main component is polyethylene terephthalate.

4. The process according to claim 3, wherein the stretching tension of said A-layer is in the range of from 5 times to 100 times the stretching tension of said B-layer.

5. The process according to claim 3 or 4, wherein the degree of crystallinity of said A-layer is in the range of 5-20%, and the degree of crystallinity of said B-layer is less than 5%.

6. The process according to any of claims 3 to 5, wherein the adhesive force between the surface of said A-layer and a metal at a temperature of 100°C is not greater than 20g.

7. The process according to any of claims 3 to 6, wherein the mean surface roughness (Ra) of said A-layer is in the range of 0.005-0.1 $\mu$m.

8. The process according to any of claims 3 to 7, wherein the thickness of said A-layer is not less than 1 $\mu$m and less than 50 $\mu$m.

9. The process according to claim 8, wherein the thickness of said A-layer is not less than 3 $\mu$m and less than 10 $\mu$m.

10. The process according to any of claims 3 to 9, wherein the thickness of said A-layer is less than 15% of the total thickness of said polyester film to be formed.

11. The process according to any of claims 3 to 10, wherein said A-layer contains inert particles.

12. The process according to claim 11, wherein the mean particle diameter of said inert particles is in the range of 0.01-10 $\mu$m.

13. The process according to claim 11 or 12, wherein said inert particles are inorganic particles selected from silicon oxide, aluminum oxide, zirconium oxide, calcium carbonate, magnesium carbonate and talc particles.

14. The process according to claim 11 or 12, wherein said inert particles are organic particles selected from cross-linked polystyrene, cross-linked divinylbenzene, benzoguanamine arid silicone particles.

15. The process according to any of claims 3 to 14, wherein the ratio of the respective thicknesses of the A- and B-layers is in the range of 1:200 - 1:4.

# FIG. 1

# FIG. 2

# FIG. 3